# EUROPÄISCHE PATENTANMELDUNG

(11) **EP 4 325 717 A1**
(43) Veröffentlichungstag der Anmeldung: **21.02.2024**
(21) Anmeldenummer: 22190580.5
(22) Anmeldetag: 16.08.2022
(51) Int. Cl.: H02P 27/08, F03D 7/02, H02M 5/458

(54) **VERFAHREN ZUM STEUERN EINES UMRICHTERS**

(71) Anmelder: Wobben Properties GmbH, 26607 Aurich (DE)
(72) Erfinder:
(74) Vertreter: Eisenführ Speiser

(57) **Zusammenfassung**

Die Erfindung betrifft ein Verfahren zum Parametrieren eines Umrichters (130), insbesondere eines Umrichters (130) einer Windenergieanlage (100), umfassend die Schritte: Festlegen einer Betriebssituation des Umrichters (130), in der der Umrichter (130) mit einer elektrischen Maschine (120) elektrisch verbunden ist; Simulieren und/oder Betreiben des Umrichters (130) in der Betriebssituation; Erfassen einer akustischen, insbesondere vibroakustischen, Größe (S) der elektrischen Maschine (120); und Ermitteln eines Parameters (B_{o,u}) für den Umrichter (130) unter Berücksichtigung der akustischen Größe (S) für die Betriebssituation, insbesondere so, dass die akustische Größe (S) minimiert wird.

## Beschreibung

Die vorliegende Erfindung betrifft ein Verfahren zum Parametrieren eines Umrichters und ein Verfahren zum Steuern eines so parametrierten Umrichters sowie eine Windenergieanlage, die einen so parametrierten Umrichter aufweist.

Die Ansteuerung von Umrichtern bzw. Umrichterystemen kann mittels einer Vielzahl verschiedener Ansteuerverfahren erfolgen, wie beispielsweise einem PWM- oder einem Toleranzbandverfahren.

Unabhängig von dem Ansteuerverfahren kann es zu Oberschwingungen in den Umrichterströmen kommen, die wiederum zu hörbaren Vibrationen in elektrisch-benachbarten Maschinen führen können.

Insbesondere im Bereich der Windenergieanlagen können diese hörbaren Vibrationen zu massiven Problemen führen. Beispielsweise kann der Generator einer Windenergieanlage Schallemissionen erzeugen, die oberhalb gesetzlicher Normen liegen, was eine Drosselung und/oder Abschaltung der Windenergieanlage zur Folge hat.

Aufgabe der vorliegenden Erfindung ist es daher wenigstens eines der obengenannten Probleme zu adressieren. Insbesondere soll ein Verfahren zum Parametrieren und/oder Steuern eines Umrichters bereitgestellt werden, welches zu weniger hörbaren Vibrationen und/oder weniger Geräuschen an einem Generator führt.

Erfindungsgemäß wird somit ein Verfahren zum Parametrieren eines Umrichters, insbesondere eines Umrichters einer Windenergieanlage vorgeschlagen, umfassend die Schritte: Festlegen einer Betriebssituation des Umrichters, in der der Umrichter mit einer elektrischen Maschine elektrisch verbunden bzw. elektrisch gekoppelt ist; Simulieren oder Betreiben des Umrichters in der Betriebssituation; Erfassen einer akustischen, insbesondere vibroakustischen, Größe der elektrischen Maschine; und Ermitteln eines Parameters für den Umrichter unter Berücksichtigung der akustischen Größe für die Betriebssituation, insbesondere so, dass die akustische Größe minimiert wird.

Es wird somit insbesondere ein Verfahren zum Parametrieren eines Umrichters einer Windenergieanlage vorgeschlagen, mit dem Geräusche und/oder Vibrationen eines, mit dem Umrichter verbundenen Generators minimiert werden können.

In einem ersten Schritt wird eine entsprechende Betriebssituation für den Umrichter festgelegt, wobei der Umrichter in dieser Betriebssituation mit einer elektrischen Maschine verbunden bzw. elektrisch gekoppelt ist.

Die elektrische Maschine kann dabei jede beliebige elektrische Maschine sein, beispielsweise eine Synchronmaschine, eine Asynchronmaschine oder dergleichen. Bevorzugt ist die elektrische Maschine ein Generator, insbesondere ein Synchrongerator, bevorzugt ein fremderregter Synchrongenerator, einer Windenergieanlage.

Eine Betriebssituation wäre dann beispielsweise der sogenannte Vollastbetrieb der Windenergieanlage. Es sind aber auch andere Betriebssituationen denkbar, wie beispielsweise der sogenannte Teillastbetrieb der Windenergieanlage, der Nachtbetrieb der Windenergieanlage oder dergleichen.

Das hierin beschriebene Verfahren kann dabei für jede beliebige Betriebssituation verwendet werden. Auch kann das Verfahren für mehrere Betriebssituationen nacheinander oder gleichzeitig durchgeführt werden.

In einem nächsten Schritt wird die Betriebssituation unter Verwendung eines entsprechenden Modells simuliert und/oder mittels eines Testaufbau und/oder einer Testanlage herbeigeführt.

Hierfür kann beispielsweise die Windenergieanlage in einem Programm, wie Matlab, nachgebildet und simuliert werden oder die Betriebssituation wird auf einem Teststand oder an einer Testanlage herbeigeführt.

Während der Simulation und/oder des Testbetriebes wird dann wenigstens eine akustische Größe, insbesondere eine virbroakustische Größe, der elektrischen Maschine erfasst.

Die akustische Größe kann jede beliebige physikalische Größe sein, die Vibrationen anzeigt oder beschreibt. Akustische Größen, die aus Vibrationen bzw. Schwingungen von Strukturbauteilen resultieren, werden auch als vibroakustische Größen bezeichnet. Bevorzugt ist die akustische Größe eine Lautstärke und/oder eine Vibration eines Generators einer Windenergieanlage.

Die akustische Größe kann direkt oder indirekt erfasst, simuliert oder geschätzt werden. Bevorzugt wird die akustische Größe in der Nähe oder direkt an der elektrischen Maschine erfasst. Beispielsweise wird eine Testanlage verwendet und die akustische Größe wird direkt mittels eines Mikrofons gemessen. Die akustische Größe kann aber auch indirekt in der Testanlage erfasst werden, beispielsweise mittels eines Dehnmessstreifens und/oder einer Strommessung und/oder einer Lasermessung und/oder einer Kamera oder dergleichen.

Bevorzugt wird zum Erfassen der akustischen Größe eine Vielzahl von Messungen, bevorzugt auch bei unterschiedlichsten Betriebssituationen, durchgeführt, insbesondere mittels sogenannter Messkampagnen. Die so erfassten Größen können dann stochastisch und/oder statistisch ausgewertet und/oder aufbereitet werden, beispielsweise durch Klassierung, Mittelung oder dergleichen.

In einem nächsten Schritt wird unter Berücksichtigung der akustischen Größe wenigstens ein Parameter für die Betriebssituation ermittelt. Der Parameter wird dabei insbesondere so gewählt und/oder bestimmt, dass die akustische Größe minimiert wird.

Anschließend wird dieser so gewählte Parameter in einer Datenbank, einem Look-Up-Table, einer Steuerung oderdergleichen fürden originären Betrieb hinterlegt. Im Falle einer Windenergieanlage würde beispielsweise der so bestimmte Parameter entsprechend in einer Steuerung eingestellt werden und die Windenergieanlage würde dann unter Berücksichtigung dieses Parameters einen entsprechenden Strom erzeugen, beispielsweise einen entsprechenden Stator- und Rotorstrom.

Es wird also insbesondere auch vorgeschlagen, dass ein Umrichter unter Berücksichtigung der, an dem Umrichter angeschlossenen elektrischen Maschine parametriert und entsprechend betrieben wird, insbesondere so, dass die elektrische Maschine weniger und/oder andere Schallemissionen erzeugt.

Das hierin beschriebene Verfahren wird also insbesondere dazu verwendet, die Parameter eines Umrichters und/oder einer Umrichtersteuereinheit und/oder einer Umrichtersteurung einzustellen. Insbesondere können mit dem hierin beschriebenen Verfahren Betriebsparameter einer Windenergieanlage schalloptimiert werden. Bevorzugt wird das Verfahren zum Parametrieren offline ausgeführt. Gleichwohl könnte das Verfahren auch in Form einer aktiven Regelung integriert werden.

Unter einem Parameter werden hierin insbesondere eine einstellbare bzw. programmierbare Variablen verstanden, die in einer Steuereinheit oder dergleichen hinterlegt sind. Derartige Parameter werden üblicherweise dazu verwendet, Steuerungen und/oder Reglungen zu dimensionieren und/oder zu limitieren. Häufig werden derartige Parameter auch als Betriebsparameter bezeichnet. Beispiele für derartige Parameter sind unter anderem Verstärkungsfaktoren, Bandgrenzen, Grenzwerte und dergleichen.

Vorzugsweise ist die akustische Größe ein Geräuschpegel einer Windenergieanlage, bevorzugt eines Generators der Windenergieanlage.

Die akustische Größe gibt also insbesondere an, wie laut die Windenergieanlage und insbesondere der Generator der Windenergieanlage sind. Besonders bevorzugt kann die akustische Größe dazu verwendet werden, die Tonalität der Windenergieanlage, insbesondere in Bezug auf ihre Umgebung, wiederzugeben.

Vorzugsweise verändert der Parameter einen Statorstrom und/oder einen Erregerstrom und/oder hat einen Einfluss auf den Sättigungszustand der elektrischen Maschine.

Der Parameter hat also insbesondere einen Einfluss auf den Statorstrom und/oder den Erregerstrom und/oder den Sättigungszustand eines Generators einer Windenergieanlage.

Insbesondere werden die Stromsollwerte, bevorzugt für den Statorstrom und/oder den Erregerstrom, weiter bevorzugt in Kombination, so gewählt, dass der Generator absichtlich in die Sättigung getrieben wird. Es wurde nämlich erkannt, dass ein bewusstes in Sättigung treiben des Generators sich positiv auf die Schallemissionen des Generators auswirkt. In besondere führt die Sättigung dabei zu gleichen bzw. ähnlichen Stromrippeln, aber geringeren Kräften bzw. Kraftpegeln innerhalb des Generators bzw. Luftspaltes.

Vorzugsweise ist der Parameter für einen aktiven Gleichrichter und/oder einen Umrichter einer Windenergieanlage.

Beispielsweise ist der Parameter für einen aktiven Gleichrichter, der mit einem Stator eines Generators einer Windenergieanlage elektrischen verbunden ist. Der Parameter wird also insbesondere dazu verwendet, einen bestimmten Statorstrom in den Stator des Generators einzuprägen.

Alternativ oder zusätzlich ist der Parameter für einen Umrichter einer Windenergieanlage, der einen Erregerstrom in den Rotor des Generators einprägt.

Der Parameter kann also sowohl dazu verwendet werden, einen Erregerstrom als auch einen Statorstrom eines Generators einer Windenergieanlage einzustellen. Bevorzugt wird der Parameter dazu verwendet, einen Statorstrom und einen Rotorstrom gleichzeitig, also in Kombination, einzustellen, insbesondere so, dass der Generator andere und/oder weniger Schallemissionen aufweist.

Vorzugsweise beschreibt der Parameter einen Optimierungsraum für einen Optimierungsalgorithmus, in dem die akustische Größe unterhalb eines vorbestimmten Grenzwertes liegt und in dem der Optimierungsalgorithmus nach einem Statorstrom und/oder einem Erregerstrom sucht, insbesondere nach einer Kombination von Stator- und Erregerstrom, die eine, bevorzugt übergeordnete, Leistungsvorgabe erfüllen.

Der Parameter beeinflusst also den Erregerstrom und/oder den Statorstrom nicht direkt, sondern gibt für einen Optimierungsalgorithmus lediglich einen bestimmten Optimierungsraum vor.

In diesem Optimierungsraum sind bevorzugt nur Lösungen enthalten, die zu einer akzeptablen akustischen Größe führen, also einer akustischen Größe, die unterhalb eines vorbestimmten Grenzwertes liegt.

Der Optimierungsalgorithmus, beispielsweise das hierin beschriebene MEPA-Verfahren, sucht dann in diesem Optimierungsraum nach Kombinationen von Erreger- und Statorstrom, die insbesondere einer Leistungsvorgabe genügen, die beispielsweise von einer übergeordneten Leistungsregelung der Windenergieanlagen kommt.

Erfindungsgemäß wird ferner ein Verfahren zum Steuern einer Windenergieanlage vorgeschlagen, umfassend die Schritte: Bereitstellen eines Parameters eines Umrichters der Windenergieanlage, wobei der Parameter mit einem vorstehend oder nachstehend beschriebenen Verfahren ermittelt wurde; und Erzeugen eines Stromes mittels des Umrichters unter Berücksichtigung des Parameters.

Der Parameter kann hierfür beispielsweise in einer Steuerung, insbesondere in einer Umrichtersteuerung, eingestellt werden und/oder einer Datenbank oder einem Look-Up-Table hinterlegt werden. Die Steuerung greift dann entsprechend auf diese Datenbank oder den Look-Up-Table zu und steuert den Umrichter entsprechend. Hierdurch erzeugt der Umrichter einen Strom in Abhängigkeit des Parameters, insbesondere wie vorstehend oder nachstehend beschrieben.

Besonders vorteilhaft bei dem hierin beschriebenen Verfahren ist die einfache Art der Implementierung und/oder die verhältnismäßig geringe Veränderung von Schaltverlusten gegenüber vergleichbaren Verfahren.

Vorzugsweise ist der Strom ein Erregerstrom und/oder ein Statorstrom der Windenergieanlage.

Das hier beschriebene Verfahren zum Steuern einer Windenergieanlage ist also insbesondere dazu vorgesehen, einen Strom zu stellen, bevorzugt einen Strom eines Generators einer Windenergieanlage, bevorzugt eine Kombination von Erregerstrom und Statorstrom. Der Statorstrom ist dabei bevorzugt ein 3-phasiger Wechselstrom und/oder der Erregerstrom ist bevorzugt ein Gleichstrom.

Es wird also insbesondere auch vorgeschlagen, dass sowohl der Erregerstrom des Generators der Windenergieanlage als auch der Statorstrom des Generators der Windenergieanlage in Abhängigkeit des Parameters eingestellt wird, insbesondere so, dass der Generator und/oder die Windenergieanlage geringere und/oder andere Schallemissionen aufweist.

Vorzugsweise wird der Statorstrom mittels d/q-Koordinaten eingestellt.

Es wird also insbesondere vorgeschlagen, dass der Statorstrom mittels d- und/oder q-Komponenten gesteuert wird und, dass die d- und/oder die q-Komponente derart in Abhängigkeit der akustischen Größe eingestellt wird, dass die akustische Größe abnimmt bzw. der Generator weniger und/oder anderen Schall emittiert.

Die d-Komponente kann beispielsweise dazu verwendet, eine radiale Größe eines Generators einer Windenergieanlage zu stellen, insbesondere eine radiale Kraftkomponente und/oder die magnetische Flussdichte im Rotor des Generators.

Die q-Komponente kann beispielsweise dazu verwendet, eine tangentiale Größe eines Generators einer Windenergieanlage zu stellen, insbesondere eine tangentiale Kraftkomponente und/oder das Drehmoment eines Rotors des Generators.

Besonders bevorzugt werden sowohl die d-Komponente als auch die q-Komponenten mit dem hierin beschriebenen Verfahren eingestellt, geregelt und/oder gesteuert.

Vorzugsweise wird der Strom in Abhängigkeit eines Arbeitspunktes und/oder einer Leistungsvorgabe ermittelt.

Insbesondere werden der Erregerstrom und der Statorstrom in Abhängigkeit eines Arbeitspunktes des Generators und einer Leistungsvorgabe für den Generator ermittelt und entsprechend erzeugt. Der Arbeitspunkt kann beispielsweise durch ein Modell ermittelt werden und/oder die Leistungsvorgabe kann durch eine übergeordnete Leistungsreglung der Windenergieanlage erfolgen.

Es wird also auch vorgeschlagen, dass neben der akustischen Größe weitere elektrische Größen und/oder mechanische Größen des Generators und/oder der Windenergieanlage berücksichtigt werden, um den Strom zu erzeugen.

Vorzugsweise wird der Strom, insbesondere der Erregerstrom und/oder der Statorstrom, unter Verwendung eines Optimierungsalgorithmus erzeugt, der bevorzugt eine maximale Leistung eines Generators der Windenergieanlage sucht.

Ein Beispiel für einen solchen Optimierungsalgorithmus bzw. ein solches Optimierungsverfahren ist das "Maximum Efficiency per Ampere"- Verfahren (kurz: MEPA). Der Algorithmus weist dabei insbesondere eine Randbedingung auf, die zu einer maximalen Ausgangsleistung pro Ampere führt.

Ein weiteres Beispiel für einen solchen Optimierungsalgorithmus ist das "Maximum Torque per Ampere"-Verfahren (kurz: MTPA).

Vorzugsweise gibt der Parameter einen Optimierungsraum für den Optimierungsalgorithmus vor, insbesondere in dem der Optimierungsalgorithmus nach einer Kombination von Stator- und Erregerstrom sucht, um eine Leistungsvorgabe zu erfüllen.

Der Parameter kann also beispielsweise auch zwei oder mehr Werte umfassen, die insbesondere einen bestimmten Bereich markieren oder einen bestimmten Raum beschreiben. Der Parameter dient dem Optimierungsalgorithmus also insbesondere als Grenze oder Randbedingung bzw. Rand.

Beispielsweise gibt der Parameter eine obere und eine untere Begrenzung vor, und der Optimierungsalgorithmus sucht zwischen diesen Werten nach jenen Werten für Erreger- und/oder Statorstrom, die bevorzugt in Kombination die maximale Ausgangsleistung pro Ampere bereitstellen.

Durch eine derartige Vorgehensweise kann insbesondere sichergestellt werden, dass selbst ein Optimierungsalgorithmus für die Leistung des Generators nicht dazu führen kann, dass der Generator im laufenden Betrieb zu laut wird.

Vorzugsweise umfasst das Verfahren zum Steuern einer Windenergieanlage ferner den Schritt: Erhöhen der Ist-Leistung eines Generators der Windenergieanlage, insbesondere bei gleichbleibender Drehzahl, insbesondere wenn ein vorbestimmter Grenzwert für die akustische Größe überschritten worden ist und/oder ein bestimmter Betriebsmodus der Windenergieanlage aktiviert worden ist.

Es wird also insbesondere auch vorgeschlagen, dass die akustische Größe im laufenden Betrieb der Windenergieanlage überwacht wird, beispielweise mittels eines Mikrofones oder dergleichen und, dass sofern die akustische Größe einen vorbestimmten Grenzwert überschreitet, die Ist-Leistung des Generators bei im Wesentlichen gleichbleibender Drehzahl angehoben wird.

Bevorzugt erfolgt dieses Anheben der Ist-Leistung erst und/oder nur dann, wenn beispielsweise ein bestimmter Betriebsmodus aktiv ist oder aktiviert worden ist, beispielsweise wenn die Windenergieanlage von einem Tag-Modus in einen Nacht-Modus schaltet oder umgekehrt. Das Anheben der Ist-Leistung bei im Wesentlichen gleichbleibender Drehzahl kann also nur durchgeführt werden, wenn eine bestimmte Voraussetzung vorliegt bzw. das Anheben der Ist-Leistung freigegeben ist.

Alternativ oder zusätzlich wird der Erregerstrom und/oder des Statorstrom verändert, insbesondere um eine höheren Sättigungszustand des Generators zu erreichen, insbesondere wenn ein vorbestimmter Grenzwert für die akustische Größe überschritten worden ist und/oder ein bestimmter Betriebsmodus der Windenergieanlage aktiviert worden ist.

Es wird also insbesondere auch vorgeschlagen, dass der Generator bewusst in die Sättigung getrieben wird, wenn der Generator bzw. die Windenergieanlage zu laut ist, also insbesondere wenn die akustische Größe einen vorbestimmten Grenzwert überschreitet.

Bevorzugt wird der Generator durch Verändern des Erregerstromes und/oder des Statorstroms in die Sättigung getrieben.

Erfindungsgemäß wird ferner eine Windenergieanlage vorgeschlagen, umfassend einen Generator, der einen Stator mit einer Drehachse aufweist, um die ein Rotor drehbar gelagert ist und einen, mit dem Stator verbundenen Umrichter, insbesondere aktiven Gleichrichter, der mit einem elektrischen Versorgungsnetz verbindbar ist; und eine Steuereinheit für den Umrichter, die dazu eingerichtet ist, ein hierin beschriebenes Verfahren auszuführen.

Vorzugsweise ist die Steuereinheit als adaptiver Regler ausgebildet, der insbesondere die magnetische Sättigung des Generators berücksichtigt.

Es wird also insbesondere vorgeschlagen, dass die Steuereinheit den aktuellen Systemzustand des Generators berücksichtigt, beispielsweise mittels eines mathematischen Modells, welches die physikalischen Zusammenhänge eines Generators berücksichtigt.

Durch eine adaptive Regelung können insbesondere deutliche optimalere Arbeitspunkte für den Generator ausfindig gemacht werden als bei klassischen Steuerungen oder dergleichen, die insbesondere nicht-adaptiv ausgeführt sind.

Der adaptive Regler berücksichtigt dabei wenigstens die magnetische Sättigung des Generators.

Es können aber auch weitere physikalische und/oder mechanische und/oder elektrische Größen berücksichtigt werden, die den aktuellen Zustand des Generators beschreiben, wie beispielsweise die Temperatur, die Drehzahl, die Eisenverluste oder dergleichen.

Bevorzugt weist der adaptive Regler zudem am Eingang einen Beobachter, insbesondere einen Kalman-Filter auf, der entsprechende Werte für das Modell schätzt, insbesondere wie nachstehend beschrieben.

Vorzugsweise umfasst die Steuereinheit wenigstens ein Modell des Generators und/oder eine Optimierungseinheit und/oder eine Ansteuereinheit, insbesondere wie vorstehend oder nachstehend beschrieben.

Besonders bevorzugt umfasst die Optimierungseinheit wenigstens einen Optimierungsalgorithmus und/oder eine Datenbank, in der die Parameter hinterlegt sind, die mittels eines Verfahrens zum Parametrieren eines Umrichters bestimmt worden sind und/oder mittels derer die Windenergieanlage gesteuert werden soll.

Weiter bevorzugt umfasst die Steuereinheit eine überordnete Leistungsregelung, die eine Leistungsvorgabe bereitstellt.

Die vorliegende Erfindung ist nachfolgend anhand der begleitenden Figuren näher erläutert, wobei für gleiche oder ähnliche Bauteile oder Baugruppen dieselben Bezugszeichen verwendet werden.
- Fig. 1A: zeigt schematisch und exemplarisch eine perspektivische Ansicht einer Windenergieanlage in einer Ausführungsform.
- Fig. 1B: zeigt schematisch und exemplarisch einen Aufbau eines elektrischen Stranges einer Windenergieanlage in einer Ausführungsform.
- Fig. 2: zeigt einen schematischen Ablauf eines Verfahrens gemäß einer Ausführungsform.
- Fig. 3: zeigt einen schematischen Aufbau einer Steuereinheit eines Umrichters einer Windenergieanlage gemäß einer Ausführungsform.

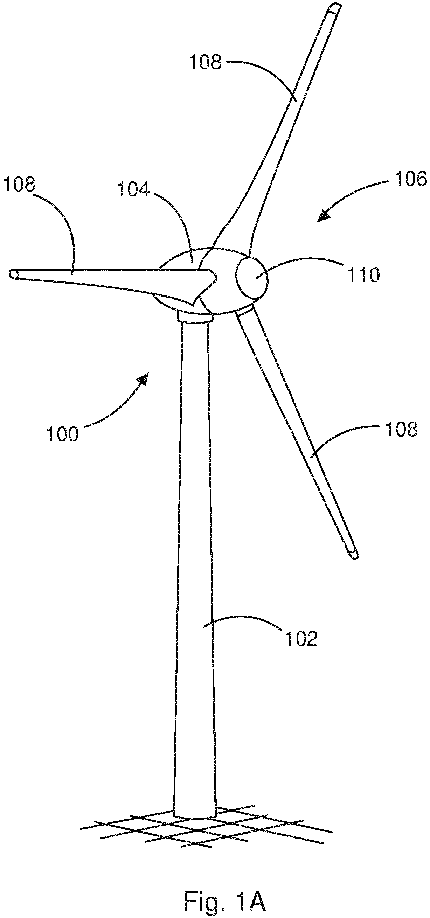

Fig. 1A zeigt schematisch und exemplarisch eine perspektivische Ansicht einer Windenergieanlage 100.

Die Windenergieanlage 100 weist einen Turm 102 und eine Gondel 104 auf.

An der Gondel 104 ist ein aerodynamischer Rotor 106 mit einer Nabe 110 angeordnet.

An der Nabe 110 sind drei Rotorblätter 108, insbesondere symmetrisch zur Nabe 110, angeordnet, bevorzugt um 120° versetzt zueinander.

Die Windenergieanlage 100 ist bevorzugt als Auftriebsläufer mit horizontaler Achse und drei Rotorblättern 108 auf der Luvseite, insbesondere als Horizontalläufer, ausgebildet.

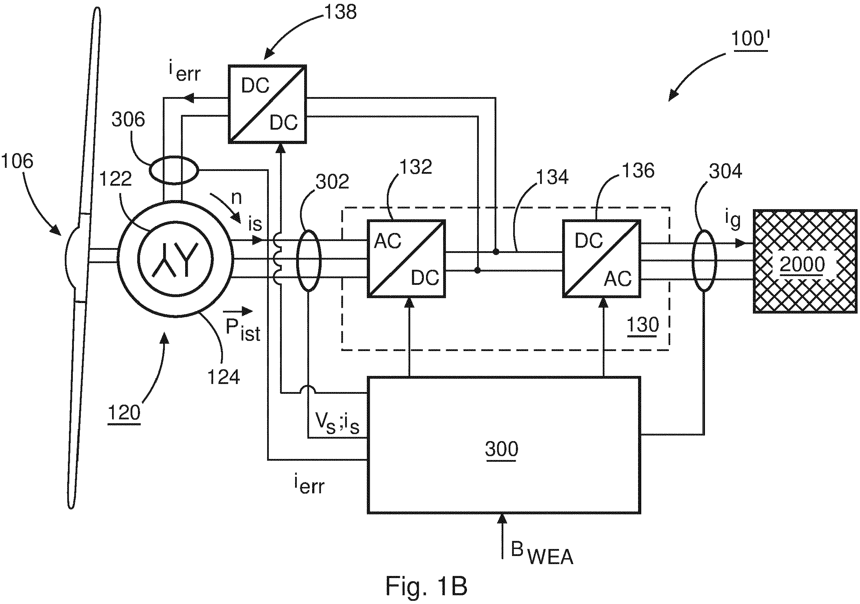

Fig. 1B zeigt schematisch und exemplarisch einen elektrischen Strang 100' einer Windenergieanlage 100, insbesondere wie in Figur 1A gezeigt.

Die Windenergieanlage 100 weist einen aerodynamischen Rotor 106 auf, der mit einem Generator 120 der Windenergieanlage 100 mechanisch verbunden ist. Der aerodynamische Rotor 106 wird durch einen Wind in eine Drehbewegung versetzt und treibt damit den Generator 120 an.

Der Generator 120 weist einen Stator 122 und einen Rotor 124 auf. Bevorzugt ist der Generator 120 als 6-phasiger und/oder fremderregter Synchrongenerator ausgebildet, insbesondere mit zwei dreiphasigen Statorsystemen 122, 124, die um 30 Grad phasenverschoben und voneinander elektrisch entkoppelt sind.

Der Generator 120 ist über einen Umrichter 130 und beispielsweise einen Windenergieanlagentransformator mit einem elektrischen Versorgungsnetz 2000 elektrisch verbunden.

Der Umrichter 130 wandelt die vom Generator 120 erzeugte elektrische Leistung in einen einzuspeisenden dreiphasigen Wechselstrom ig. Der Umrichter 130 ist hierfür bevorzugt als Umrichtersystem ausgebildet, d.h. der Umrichter weist mehrere Umrichtermodule auf, die bevorzugt parallel miteinander verschaltet sind.

Der Umrichter 130 umfasst einen Gleichrichter 132, insbesondere einen aktiven Gleichrichter, optional einen Zwischenkreis 134, und einen Wechselrichter 136. Bevorzugt ist der Umrichter 130 bzw. sind die Umrichtermodule als Direkt-Umrichter (engl. back-to-back converter) ausgeführt.

Zudem wird aus dem Umrichter 130, insbesondere aus dem Gleichspannungszwischenkreis 134, eine Erregung 138 herausgeführt, die mittels eines Erregerstromes iₑᵣᵣ den Generator 120 fremderregt. Hierfür kann beispielsweise ein weiterer Gleichrichter 138 vorgesehen sein.

Der Umrichter wird 130 wird mittels einer Steuereinheit 300 gesteuert. Die Steuereinheit 300 kann auch als Umrichtersteuereinheit bezeichnet werden. Bevorzugt ist die Steuereinheit 300 mit einer Windenergieanlagensteuereinheit und/oder einem Netzbetreiber verbunden, um Sollvorgaben Bwea, beispielsweise für den einzuspeisenden Strom i_{g} oder die zu erzeugende Leistung P_{Soll} zu empfangen.

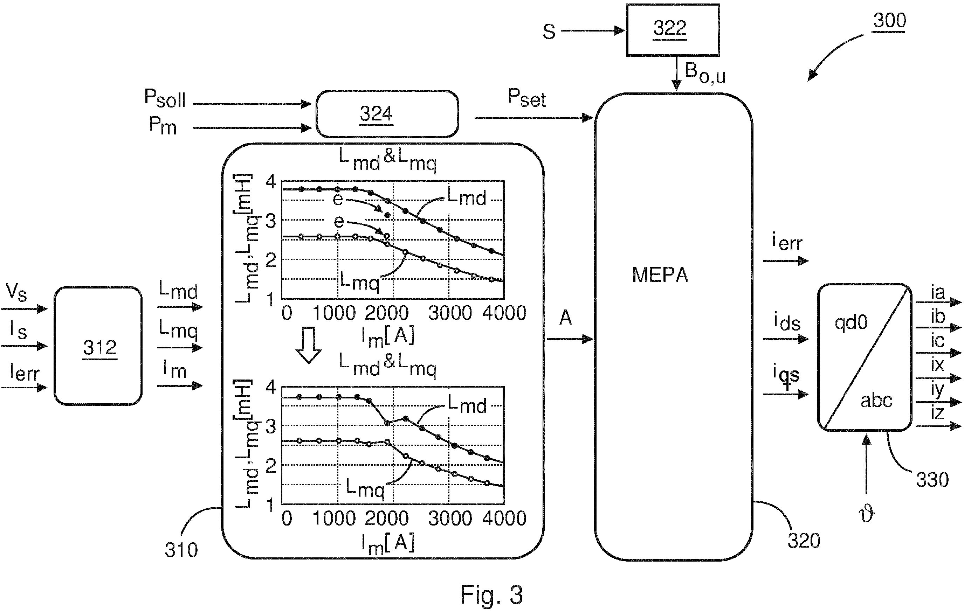

Die Steuereinheit 300 ist insbesondere dazu eingerichtet, den Gleichrichter 132, bevorzugt den aktiven Gleichrichter 132, mit einem hierin beschriebenen Verfahren anzusteuern. Hierfür weist die Steuereinheit 300 diverse Messeinheiten 302, 304, 306 auf, beispielsweise zum Erfassen eines Statorstromes is, zum Erfassen des einzuspeisenden Stromes i_{g} oder zum Erfassen eines Erregerstromes iₑᵣᵣ oder dergleichen. Die Steuereinheit kann aber auch noch weitere oder andere Mess- und/oder Erfassungseinheiten aufweisen, beispielsweise für Messgrößen wie in Fig. 3 beschrieben.

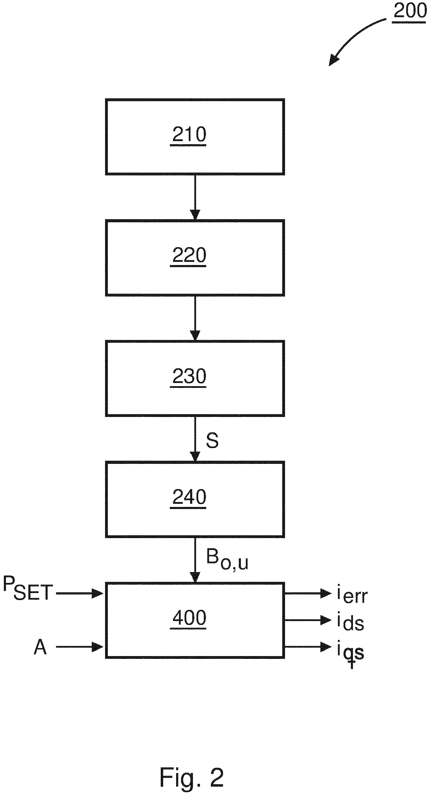

Fig. 2 zeigt einen schematischen Ablauf 200 zum Parametrieren eines Umrichters, wie beispielsweise in Fig. 1B gezeigt.

In einem ersten Schritt 210 wird eine Betriebssituation eines Umrichters festgelegt, in der der Umrichter mit einem Generator einer Windenergieanlage verbunden ist.

In einem zweiten Schritt 220 wird für diese Betriebssituation des Umrichters eine Simulation durchgeführt und/oder ein entsprechender Umrichter in einem Teststand oder einer Testanlage so betrieben.

In einem dritten Schritt 230 wird während dieser Simulation und/oder während des Betreibens eine akustische Größe S erfasst, insbesondere die Lautstärke des Generators. Besonders bevorzugt für mehrere Arbeitspunkte und durch mehrere Messungen.

In einem vierten Schritt 240 wird ein Parameters B_{o,u} für den Umrichter 130 unter Berücksichtigung der so erfassten akustischen Größe S ermittelt. Der Parameters B_{o,u} wird dabei insbesondere so gewählt, dass die Schallemission des Generators sich verändern und/oder abnehmen.

Gemäß einer Ausführungsform wird der so bestimmte Parameter B_{o,u} dann in der Steuereinheit der Windenergieanlagen eingestellt bzw. in einer entsprechenden Datenbank hinterlegt.

Die Windenergieanlage bzw. baugleiche Windenergieanlagen werden dann entsprechend mittels eines Verfahrens 400 in Abhängigkeit eines Arbeitspunktes A des Generators und unter Berücksichtigung des Parameters B_{o,u} betrieben, insbesondere werden der Erregerstrom iₑᵣᵣ und der Statorstrom i_{ds}. i_{qs} der Generatoren unter Verwendung eines Optimierungsalgorithmus und in Abhängigkeit des Arbeitspunktes A und des Parameters B_{o,u} bestimmt bzw. erzeugt.

Fig. 3 zeigt einen schematischen Aufbau einer Steuereinheit 300 eines Umrichters einer Windenergieanlage gemäß einer Ausführungsform, insbesondere eines Umrichters 130 und einer Windenergieanlage 100 wie in den Figuren 1A und 1B gezeigt.

Die Steuereinheit 300 umfasst dabei insbesondere ein Modell des Generators 310, eine Optimierungseinheit 320 und eine Ansteuereinheit 330. Die Steuereinheit ist dabei bevorzugt als adaptiver Regler ausgebildet.

Das Modell des Generators 310 bildet den Generator 120 der Windenergieanlage 100 in einem mathematischen Modell ab, welches die entsprechenden physikalischen Zusammenhänge eines Generators berücksichtigt, und ermittelt aus entsprechenden Mess- und/oder Schätzdaten einen aktuellen Arbeitspunkt A des Generators. Beispielsweise wird dieser Arbeitspunkt aus der Statorspannung Vs, dem Statorstrom is und dem Erregerstrom iₑᵣᵣ ermittelt. Hierfür werden beispielsweise die magnetischen Induktivitäten L_{md}, L_{mq} und der Magnetisierungsstrom i_{M} mittels eines Beobachters 312, wie einem Kalman-Filter, geschätzt, beispielsweise aus der Statorspannung Vs, dem Statorstrom is und dem Erregerstrom iₑᵣᵣ. Anschließend wird daraus unter Berücksichtigung des Modells des Generators 310 ein entsprechender Arbeitspunkt A ermittelt. Das Modell des Generators 310 berücksichtigt insbesondere die magnetische Sättigung des Generators in Abhängigkeit des Arbeitspunktes bzw. die magnetischen Induktivitäten L_{md}, L_{mq} in Abhängigkeit des Magnetisierungsstromes i_{M}. Das Modell kann aber auch noch weitere physikalische Zusammenhänge berücksichtigen, wie beispielweise etwaige Statorverluste oder dergleichen.

Die Optimierungseinheit 320 bestimmt unter Verwendung eines Optimierungsalgorithmus, wie beispielsweise dem MEPA-Verfahren, den Erregerstrom iₑᵣᵣ für den Generator, die d-Komponente des Statorstrom i_{ds} und die q-Komponente des Statorstroms i_{qs}. Hierfür berücksichtigt die Optimierungseinheit 320 eine Leistungsvorgabe Pₛₑₜ, einen Parameter B_{o,u} und den aktuellen Arbeitspunkt des Generators A.

Der Leistungsvorgabe Pset wird beispielweise durch eine übergeordnete Leistungseinheit 324 bzw. eine übergeordnete Leistungssteuerung vorgegeben, die beispielsweise auf Basis einer elektrischen Soll-Leistung Pₛₒₗₗ für den Generator und einer mechanischen Leistung des Generators Pₘ, die beispielsweise über die Drehzahl n ermittelt wird. Bevorzugt ist die Leistungseinheit 324 als PI-Regler ausgebildet.

Der Parameter B_{o,u} für den Optimierungsraum wird durch eine Parametereinheit 322 vorgegeben. Die Parametereinheit 322 weist beispielsweise einen Look-Up-Table auf, der mit Parametern bestückt ist, die durch ein hierin beschriebenes Verfahren zum Parametrieren eines Umrichters ermittelt worden sind. Insbesondere wurden die Parameter B_{o,u} in Abhängigkeit einer akustischen Größe S bestimmt. Die Parameter B_{o,u} geben also insbesondere ein Arbeitsfeld für den Optimierungsalgorithmus der Optimierungseinheit 320 vor.

Die Optimierungseinheit 320 bestimmt also den Erregerstrom iₑᵣᵣ, die d-Komponente des Statorstrom i_{ds} und die q-Komponente des Statorstroms i_{qs} in Abhängigkeit des Parameter B_{o,u}. Insbesondere gibt der Parameter B_{o,u} bestimmte Bereiche vor, auf die der Optimierungsalgorithmus nur angewendet werden darf. Hierdurch kann insbesondere garantiert werden, dass die akustische Größe S nicht einen vorbestimmten Grenzwert überschreitet, auch dann nicht, wenn ein Leistungsoptierungsalgorithmus, durch die Leistungseinheit 324 gezeigt, innerhalb der Windenergieanlagensteuerung zum Einsatz kommt.

Der Erregerstrom iₑᵣᵣ für den Generator wird dazu verwendet, den Erregerstrom am Generator einzustellen, wie beispielsweise in Figur 1B gezeigt.

Die d-Komponente des Statorstrom i_{ds} und die q-Komponente des Statorstroms i_{qs} werden auf die Ansteuereinheit 330 des aktiven Gleichrichters gegeben.

Die Ansteuereinheit 330 berechnet aus den d/q-Komponenten i_{ds}, i_{dq} die abc-Koordinaten für den Statorstrom is. Sofern der Generator als 6-phasiger Generator mit zwei dreiphasigen Statorsystemen 122, 124 ausgeführt ist, wie beispielsweise in Fig. 1B gezeigt, ermittelt die Ansteuereinheit die abc-Koordinaten iₐ, i_{b}, i_{c} für das erste Statorsystem 122 und die abc-Koordinaten iₓ, i_{y}, i_{z} für das zweite Statorsystem 124. Bevorzugt werden die abc-Koordinaten unter Berücksichtigung einer Temperatur 9, insbesondere einer Generatortemperatur, ermittelt.

### Bezuqszeichenliste

- 100: Windenergieanlage
- 100': elektrischer Strang, insbesondere einer Windenergieanlage
- 102: Turm, insbesondere der Windenergieanlage
- 104: Gondel, insbesondere der Windenergieanlage
- 106: aerodynamischer Rotor, insbesondere der Windenergieanlage
- 108: Rotorblatt, insbesondere der Windenergieanlage
- 110: Nabe, insbesondere der Windenergieanlage
- 120: Generator, insbesondere 6-phasiger Generator der Windenergieanlage
- 122: Stator, insbesondere elektrischer Stator des Generators
- 122': erstes dreiphasiges System, insbesondere des Stators
- 122": zweites dreiphasiges System, insbesondere des Stators
- 124: Rotor, insbesondere elektrischer Rotor des Generators
- 130: Umrichter, insbesondere Leistungsumrichter der Windenergieanlage
- 132: Gleichrichter, insbesondere aktiver Gleichrichter des Umrichters
- 134: Zwischenkreis, insbesondere des Umrichters
- 136: Wechselrichter, insbesondere des Umrichters
- 138: Gleichrichter, insbesondere des Umrichters

- 200: Verfahren zum Steuern eines Umrichters
- 210: Schritt: Festlegen einer Betriebsituation
- 220: Schritt: Simulieren und/oder Betreiben des Umrichters
- 230: Schritt: Erfassen einer akustischen Größe

- 300: Steuereinheit eines Umrichters, insbesondere eines aktiven Gleichrichters
- 310: Modell des Generators
- 320: Optimierungseinheit, insbesondere der Steuereinheit
- 322: Parametereinheit, insbesondere der Steuereinheit
- 324: Leistungseinheit, insbesondere der Steuereinheit
- 330: Ansteuereinheit, insbesondere des Umrichters

- 2000: elektrische Versorgungsnetz

- A: Arbeitspunkt, insbesondere des Generators
- B_{ο,u}: Parameter, insbesondere für einen Arbeitsbereich
- i_{g}: einzuspeisenden Strom i_{g}
- is: Statorstrom
- iₐ, i_{b}, i_{c}: Statorstrom, insbesondere in abc-Koordinaten
- ix, iy, iz: Statorstrom, insbesondere in abc-Koordinaten

- i_{dS}: d-Komponente, insbesondere des Statorstromes
- i_{qS}: q-Komponente, insbesondere des Statorstromes
- ierr: Erregerstrom

- Lmd, Lmq: Magnetische Induktivitäten, insbesondere des Generators

- MEPA: Optimierungsalgorithmus
- n: Rotordrehzahl

- P_{Istl}: elektrische Ist-Leistung, insbesondere des Generators
- Pₛₑₜ: Leistungsvorgabe, für den Generator
- P_{Soll}: elektrische Soll-Leistung, insbesondere für den Generators
- Pₘ: mechanische Leistung, insbesondere des Generators

- S: Akustische Größe

- vs: Statorspannung

- ϑ: Temperatur, insbesondere des Generators

## Patentansprüche

1. Verfahren zum Parametrieren eines Umrichters (130), insbesondere eines Umrichters (130) einer Windenergieanlage (100), umfassend die Schritte:
- Festlegen einer Betriebssituation des Umrichters (130), in der der Umrichter (130) mit einer elektrischen Maschine (120) elektrisch verbunden ist;
- Simulieren und/oder Betreiben des Umrichters (130) in der Betriebssituation;
- Erfassen einer akustischen, insbesondere vibroakustischen, Größe (S) der elektrischen Maschine (120); und
- Ermitteln eines Parameters (B_{o,u}) für den Umrichter (130) unter Berücksichtigung der akustischen Größe (S) für die Betriebssituation, insbesondere so, dass die akustische Größe (S) minimiert wird.

2. Verfahren zum Parametrieren eines Umrichters (130) nach Anspruch 1, wobei
- die akustische Größe (S) ein Geräuschpegel einer Windenergieanlage ist, bevorzugt eines Generators der Windenergieanlage.

3. Verfahren zum Parametrieren eines Umrichters (130) nach Anspruch 1 oder 2, wobei
- der Parameter (B_{o,u}) einen Statorstrom (is) und/oder einen Erregerstrom (iₑᵣᵣ) verändert und/oder Einfluss auf den Sättigungszustand der elektrischen Maschine hat.

4. Verfahren zum Parametrieren eines Umrichters (130) nach wenigstens einem der vorstehenden Ansprüche, wobei
- der Parameter (B_{o,u}) für einen aktiven Gleichrichter (132) einer Windenergieanlage (100) ist, der mit einem Stator (122) eines Generators (120) der Windenergieanlage (120) elektrisch verbunden ist, um einen Statorstrom (is) einzuprägen; und/oder
- der Parameter (B_{o,u}) für einen Umrichter (130, 138) einer Windenergieanlage ist, der mit einem Rotor (124) eines Generators (120) der Windenergieanlage (100) elektrisch verbunden ist, um einen Erregerstrom (iₑᵣᵣ) einzuprägen.

5. Verfahren zum Parametrieren eines Umrichters (130) nach wenigstens einem der vorstehenden Ansprüche, wobei
- der Parameter (B_{o,u}) einen Optimierungsraum für einen Optimierungsalgorithmus (MEPA) beschreibt, in dem:
- die akustische Größe (S) unterhalb eines vorbestimmten Grenzwertes liegt; und
- der Optimierungsalgorithmus (MEPA) nach einem Erregerstrom (iₑᵣᵣ) und/oder einem Statorstrom (is) sucht, insbesondere nach einer Kombination von Stator- und Erregerstrom, die eine, bevorzugt übergeordnete, Leistungsvorgabe (Pₛₑₜ) erfüllt.

6. Verfahren zum Steuern einer Windenergieanlage (100), umfassend die Schritte:
- Bereitstellen eines Parameters (B_{o,u}) eines Umrichters (130) der Windenergieanlage (100), wobei der Parameter (B_{o,u}) mit einem Verfahren nach wenigstens einem der Ansprüche 1 bis 5 ermittelt wurde;
- Erzeugen eines Stromes (is, iₑᵣᵣ) mittels eines Umrichters (132, 138) unter Berücksichtigung des Parameters (B_{o,u}).

7. Verfahren zum Steuern einer Windenergieanlage (100) nach Anspruch 6, wobei
- der Strom ein Erregerstrom (iₑᵣᵣ) und/oder ein Statorstrom (is) der Windenergieanlage (100) ist.

8. Verfahren zum Steuern einer Windenergieanlage (100) nach Anspruch 6 oder 7, wobei
- der Statorstrom (is) mittels d/q-Koordinaten (i_{dS}, i_{qS}) eingestellt wird.

9. Verfahren zum Steuern einer Windenergieanlage (100) nach wenigstens einem der Ansprüche 6 bis 8, wobei
- der Strom (is, iₑᵣᵣ) in Abhängigkeit eines Arbeitspunktes (A) und/oder einer Leistungsvorgabe (Pset) ermittelt wird.

10. Verfahren zum Steuern einer Windenergieanlage (100) nach wenigstens einem der Ansprüche 6 bis 9, wobei
- der Strom (is, iₑᵣᵣ) durch einen Optimierungsalgorithmus (MEPA) bestimmt wird.

11. Verfahren zum Steuern einer Windenergieanlage (100) nach wenigstens einem der Ansprüche 6 bis 10, wobei
- der Parameter (B_{o,u}) einen Optimierungsraum für den Optimierungsalgorithmus vorgibt, insbesondere in dem der Optimierungsalgorithmus nach einer Kombination von Stator- und Erregerstrom sucht, um eine Leistungsvorgabe zu erfüllen.

12. Verfahren zum Steuern einer Windenergieanlage (100) nach wenigstens einem der Ansprüche 6 bis 11, umfassend den Schritt:
- Erhöhen der Ist-Leistung eines Generators der Windenergieanlage, insbesondere bei gleichbleibender Drehzahl, bevorzugt, wenn ein vorbestimmter Grenzwert für die akustische Größe überschritten worden ist und/oder ein bestimmter Betriebsmodus der Windenergieanlage aktiviert worden ist: und/oder
- Verändern des Erregerstromes und/oder des Statorstromes, insbesondere um eine höheren Sättigungszustand des Generators zu erreichen, bevorzugt, wenn ein vorbestimmter Grenzwert für die akustische Größe überschritten worden ist und/oder ein bestimmter Betriebsmodus der Windenergieanlage aktiviert worden ist.

13. Windenergieanlage (100), umfassend:
- einen Generator (120), der einen Stator (122) mit einer Drehachse umfasst, um die ein Rotor (124) gelagert ist; und
- einen, mit dem Stator (122) verbundenen Umrichter (130), insbesondere aktiven Gleichrichter (132), der mit einem elektrischen Versorgungsnetz (2000) verbindbar ist; und
- eine Steuereinheit (300) für den Umrichter (130), die dazu eingerichtet ist, ein Verfahren nach wenigstens einem der Ansprüche 6 bis 12.

14. Windenergieanlage (100), umfassend:
- die Steuereinheit als adaptiver Regler ausgebildet ist, der insbesondere die magnetische Sättigung und/oder die Magnetisierungsinduktivtäten des Generators (120) berücksichtigt, beispielsweise durch eine Schätzung mittels eines Beobachters, wie einem Kalman-Filter.

15. Windenergieanlage (100) nach Anspruch 14, wobei
- die Steuereinheit ein Modell des Generators (310) und/oder eine Optimierungseinheit (320) und/oder eine Ansteuereinheit (330) umfasst.
